# EUROPEAN PATENT APPLICATION

(11) **EP 1 819 032 A1**
(43) Date of publication of application: **15.08.2007**
(21) Application number: 06300123.4
(22) Date of filing: 10.02.2006
(51) Int. Cl.: H02M 3/335

(54) **Switched mode power supply comprising a discharging circuit**

(71) Applicant: Thomson Licensing S.A., 92100 Boulogne-Billancourt (FR)
(72) Inventor: Bao, You Bing, 2/F., Park B, Zhen Fu Bao Science, Futian Free Trade Zone, Shenzhen (CN); Luo, Wei 2/.,Park B, Zhen Fu Bao Science & Indus., Shenzhen (CN)
(74) Representative: Arnold, Klaus-Peter

(57) **Abstract**

The switched mode power supply comprises a transformer (TR1, TR2) with a primary winding (W1), a switching transistor (M1) coupled with a current input to the primary winding (W1), a driver stage (DR, CO) coupled to the switching transistor (M1), a supply circuit (RE) for providing a supply voltage (Vcc) for the driver stage (DR, CO), and an input capacitor (C1) coupled to the primary winding (W1). It comprises further a discharging circuit (DI) being coupled to the supply voltage (Vcc) for discharging the input capacitor (C1), when the switched mode power supply is switched off. The discharging circuit (DI) is coupled in particular with an input terminal (3) to an input voltage (V1, V3) of the switched mode power supply for controlling the operation of the discharging circuit (DI), and the input capacitor (C1) is discharged via a start-up circuit (R4, ST).

## Description

### FIELD OF THE INVENTION

The present invention relates to a switched mode power supply comprising a transformer with a primary winding, a secondary winding and an auxiliary winding, a switching transistor coupled to the primary winding, a driver stage for the operation of the switching transistor, an input capacitor coupled to the primary winding and a supply circuit coupled to the auxiliary winding for providing a supply voltage for the driver circuit. A switched mode power supply of this kind is utilized for example within a consumer electronics appliance.

### BACKGROUND

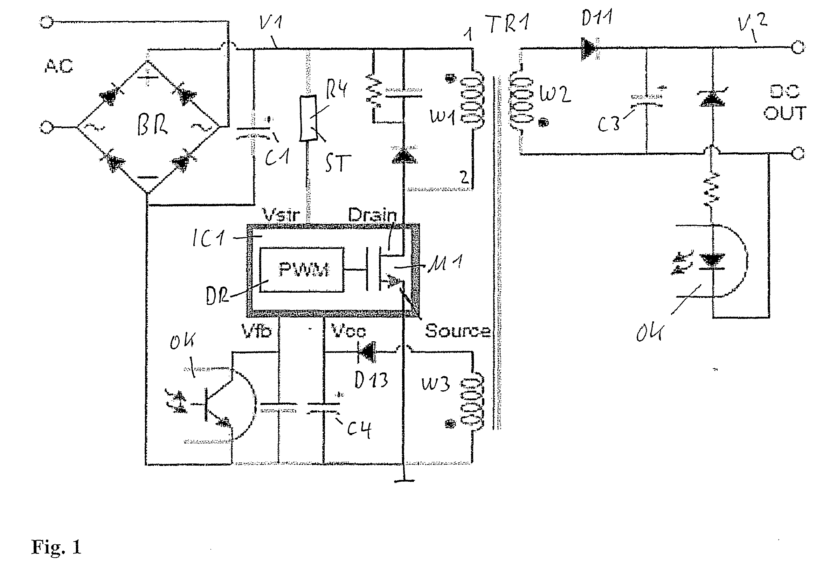

A prior art switched mode supply as used in many appliances is schematically shown in Fig. 1. It comprises a bridge rectifier BR to which a mains voltage AC is coupled for providing a rectified voltage V1. The voltage V1 is coupled to an input capacitor C1 for smoothing the voltage V1 and is coupled to a first terminal 1 of a primary winding W1 of a transformer TR1. The primary winding W1 is coupled with its other end 2 to a switching transistor M1, which is coupled with a current output to ground. The switched mode power supply comprises in addition a driver circuit DR which is coupled to a control input of the switching transistor M1 for the operation of the switching transistor M1.

The transformer TR1 comprises further a secondary winding W2 for providing a DC output voltage V2 via a rectifier diode D11 and a capacitor C3. The output voltage V2 is stabilized via a feedback circuit comprising an opto-coupler OK, which transmits a feedback signal Vfb to the primary side of the switched mode power supply to the driver stage DR. The driver stage includes for example a pulse-width modulator PWM for operating the switching transformer M1 in dependency of the current variation of a load. The switching transistor M1 is in this embodiment a MOSFET comprising a drain and a source terminal.

The transformer TR1 comprises further an auxiliary winding W3 arranged on the primary side of the switched mode power supply, which is coupled to a supply circuit for generating a supply voltage Vcc during operation of the switch mode power supply. The supply circuit comprises a diode D13, which is coupled to the auxiliary winding W3, and a capacitor C4, which is coupled between an output terminal of the diode D13 and ground for providing a smoothed DC supply voltage VCC for the operation of the driver stage DR.

The switched mode power supply comprises further a start-up circuit ST coupled to the input capacitor C1, which provides a start-up voltage Vstr for the driver stage DR, when the mains voltage AC is applied to the bridge rectifier BR. The start-up voltage Vstr is necessary for the driver stage DR for generating first switching pulses for the operation of the switching transistor M1. After the start-up phase, which is usually in the range of about 1 sec, the nominal values of the voltages V2 and Vcc are reached for a normal mode operation of the switched mode power supply, in which the driver circuit DR uses the supply voltage Vcc for operation, and in which the start-up voltage Vstr is no more necessary.

In this embodiment the driver circuit DR and the switching transistor M1 are integrated into an integrated controller circuit IC1, FSDH0265RN, manufactured by Fairchild Semiconductor Corporation. The controller circuit IC1 includes further parts of the start-up circuit for handling the voltage V1, in particular an internal switch, which switches from the start-up circuit ST to the supply voltage Vcc, when a supply voltage with a sufficiently high value is available after switching on of the power supply. The start up circuit ST comprises particularly a start-up resistor R4, which is coupled between the input capacitor C1 and an input terminal of the controller circuit IC1, and which has for example a value of 56 kOhm.

Other integrated controller circuits, for example the FAN7554 of Fairchild Semiconductor Corporation, require also a start-up circuit with a resistor chain for limiting the start up current, but there the resistor chain is coupled directly to the capacitor C3 of the supply circuit. Further details about use and operation of these controller circuits are described in respective data sheets as provided by the manufacturers.

In a switched mode power supply of this kind, it may happen that the input capacitor C1 is not discharged when the switched mode power supply is switched off. The capacitor C1 may keep a voltage which can stay above 100 Volts even for many days. A switched mode power supply of this kind provides therefore some danger for a user or even a qualified service person.

### SUMMARY OF THE INVENTION

It is the object of the present invention to provide a switched mode power supply as described above, which provides a safe inspection mode without any danger, after it is switched off.

This object is achieved by a switched mode power supply as described in claim 1. Preferred embodiments of the invention are described in the dependent claims.

The switched mode power supply according to the invention comprises a transformer with a primary winding, a secondary winding and an auxiliary winding, a switching transistor coupled to the primary winding, a driver stage for the operation of the switching transistor, a supply circuit for providing a supply voltage for the operation of the driver stage, and an input capacitor coupled to a DC input voltage and to the primary winding. It comprises further a start-up circuit coupling the driver circuit to the input capacitor for providing a start-up current after switching on of the switched mode power supply, and a discharging circuit coupled to the supply voltage being provided by the supply circuit.

The discharging circuit comprises in particular a switching stage, which is blocking during operation of the switched mode power supply, and which provides a current path for discharging the input capacitor, when the switched mode power supply is switched off.

In a preferred embodiment, the discharging circuit is coupled with an input to an input voltage of the switched mode power supply for sensing, when an input voltage is present for the operation of the switched mode power supply. When the input voltage of the switched mode power supply is switched off, the switching stage switches through for discharging any charge capacitor of the supply circuit as well as the input capacitor. The start-up circuit comprises in particular a resistor with a high resistance, which is coupled to a supply voltage input of the driver circuit and therefore to the supply voltage of the supply circuit, which provides a smooth discharging of the input capacitor within a short time, when the switched mode power supply is switched off.

### SHORT DESCRIPTION OF THE DRAWINGS

Preferred embodiments of the invention are explained now in more detail with regard to schematic drawings, which show:
- Figure 1: a switched mode power supply comprising an integrated controller circuit, as known from prior art, and
- Figure 2: a switched mode power supply comprising a discharging circuit in accordance with the invention.

### PREFERRED EMBODIMENTS OF THE INVENTION

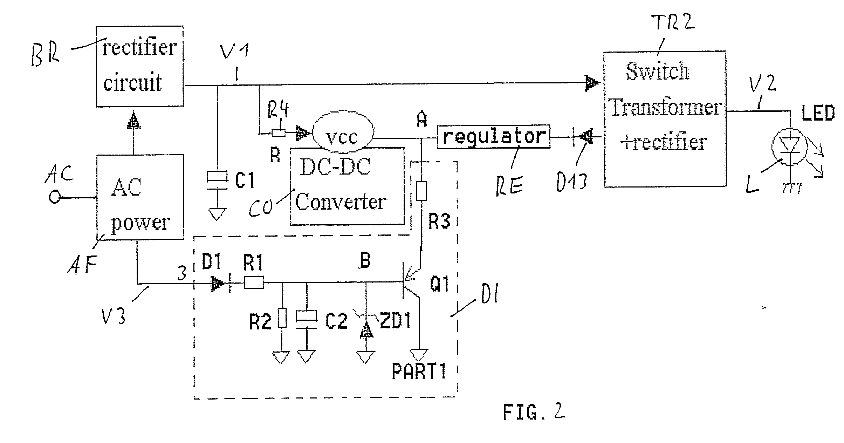

The circuit arrangement as shown in figure 2 comprises a rectifier circuit BR for rectifying an AC mains voltage AC for a switched mode power supply comprising an input capacitor C1 and a switch mode transformer TR2, in correspondence with the switched mode power supply as described already before with regard to figure 1. The switched mode power supply comprises further a DC-DC converter which is coupled to an input voltage V1 at the input capacitor C1 via a start-up circuit comprising a resistor R4, for providing a start-up voltage for the start-up of the switched mode power supply, and comprises a supply circuit RE coupled to a switch mode transformer TR2 for providing a supply voltage Vcc during operation of the switched mode power supply. The circuit arrangement comprises further an AC power section AF arranged ahead of the rectifier circuit BR, which includes a mains filter.

The switched mode power supply provides at the secondary side a DC output voltage V2 for the operation of a load L, and the switch mode transformer TR2 comprises further an auxiliary winding, not shown, for providing a voltage via diode D13 for the supply circuit RE during operation of the switched mode power supply. The DC-DC converter CO comprises in particular a driver stage and a switching transistor coupled to the primary winding of the switch mode transformer TR2, not shown. The DC-DC converter CO may comprise an integrated controller circuit as described with regard to figure 1. A switched mode power supply of this kind is known and corresponds essentially with that of figure 1, and may operate in particular, but not necessarily, as a flyback converter.

According to the invention, the switched mode power supply comprises further a discharging circuit DI, which is coupled to the supply voltage Vcc via a node A. It comprises further an input terminal 3, which is coupled in this embodiment to a second input voltage V3 provided by the AC power section AF. The discharging circuit DI comprises a switching stage, in this embodiment a pnp transistor Q1, which is coupled with a current input via a resistor R3 to the node A and with a current output to ground. The control input of the switching stage is coupled to a diode D1 coupled to input terminal 3 for providing an operation of the switching stage in response to the AC mains voltage.

The input terminal 3 may be coupled alternatively also to the rectifier circuit BR or to the input capacitor C1. To the node A in particular a capacitor of the supply circuit RE is coupled, not shown, which provides the supply voltage Vcc for the DC-DC converter CO.

The diode D1 provides a rectified voltage, which is applied via a voltage divider with resistors R1 and R2 to a charge capacitor C2. The capacitor C2 is coupled to the control input of the switching transistor Q1. A Zener diode ZD1 is coupled in parallel with the capacitor C2 for providing a threshold voltage for the operation of the switching stage with transistor Q1. The threshold voltage as defined by the Zener diode ZD1 is in particular such, that the voltage across capacitor C2, at node B, is higher than the supply voltage Vcc during operation of the switched mode power supply. This is the case also during a standby operation of the switched mode power supply.

The operation of the switched mode power supply is as follows: When the mains voltage AC is applied to the circuit arrangement, after switching on of the arrangement, the input capacitor C1 is charged up via the rectifier circuit BR and a current is provided via resistor R4 of the start-up circuit for providing a supply voltage Vcc for the DC-DC converter CO. When the supply voltage Vcc reaches a threshold, the DC-DC converter CO starts operating and therefore the output voltages at the secondary winding and the auxiliary winding of the switch mode transformer TR2 are arising. After the start up phase, which may be in the range of about one second, the switched mode power supply goes into a normal operation mode, in which stabilized output voltages are present at the secondary winding and the auxiliary winding of the switch mode transformer TR2.

When an AC voltage is present at the AC power section AF, the input voltage V3 is applied to the discharging circuit DI, which charges up the charge capacitor C2 via rectifier diode D1 and resistor R1, until the threshold as defined by the Zener diode ZD1 is reached. The capacitor C2 is charged up in a very short time and therefore the switching stage with transistor Q1 is blocked. The power consumption of the discharging circuit DE is therefore very low during operation of the switched mode power supply. This is also the case during the standby mode of the switched mode power supply.

When the mains voltage AC is switched off, the voltage V3 is switched off also and therefore the charge capacitor C2 is discharged via resistor R2. Because at node A still the supply voltage Vcc is present, the switching stage switches through and as a result, any capacitor of the supply circuit RE is discharged and also the input capacitor C1 via the resistor R4 of the start-up circuit. The value of the resistor R3 can be selected such for example, that the input capacitor C1 is discharged within seconds.

In a preferred embodiment the following values are used for the components: R1: 200 kOhm, R2: 100 kOhm, R3: 1 kOhm, R4: 56 kOhm, C1: 330 micro-Farad, C2: 1 micro-Farad, C4: 47 micro-Farad, and a Zener diode ZD1 with a nominal Zener voltage of 18 Volts.

## Claims

1. Switched mode power supply comprising a
transformer (TR1, TR2) with a primary winding (W1), a secondary winding (W2) and an auxiliary winding (W3),
a switching transistor (M1) coupled with a current input to the primary winding (W1),
a driver stage (DR, CO) coupled to the switching transistor (M1) for the operation of the switching transistor,
a supply circuit (RE) for providing a supply voltage (Vcc) for the driver stage (DR, CO),
an input capacitor (C1) coupled to the primary winding (W1), and
a start up circuit (ST, R4) coupling the driver stage (DR, CO) to the input capacitor (C1), **characterized in that** a discharging circuit (DI) is coupled to the supply voltage (Vcc).

2. Switched mode power supply according to claim 1, wherein the discharging circuit (DI) is coupled with an input terminal (3) to an input voltage (V1, V3) of the switched mode power supply.

3. Switched mode power supply according to claim 1 or 2, wherein the supply circuit (RE) comprises a diode (D13) and a capacitor (C4) for providing a smoothed DC supply voltage (Vcc) for the driver circuit (DR, CO).

4. Switched mode power supply according to claim 1, 2 or 3, wherein a switching stage (Q1) of the discharging circuit (DI) is coupled to the supply circuit (D13, C4, RE), for discharging the input capacitor (C1), when the switched mode power supply is switched off.

5. Switched mode power supply according to claim 4, wherein the discharging circuit (DI) comprises a threshold circuit (ZD1) coupled to the input terminal (3) and to the switching stage (Q1) for controlling the operation of the switching stage (Q1).

6. Switched mode power supply according to claim 4 or 5, wherein the switching stage (Q1) of the discharging circuit (DI) is coupled to the capacitor (C4) of the supply circuit (D13, C4, RE).

7. Switched mode power supply according to one of the preceding claims, wherein the input capacitor (C1) is discharged via the start-up circuit (R4, ST) and the discharging circuit (DI), when the switched mode power supply is switched off.
